**Europäisches Patentamt**

**European Patent Office**

**Office européen des brevets**

(19)

(11) Veröffentlichungsnummer: **0 046 991**
**B1**

(12) **EUROPÄISCHE PATENTSCHRIFT**

(45) Veröffentlichungstag der Patentschrift:
13.05.87

(51) Int. Cl.⁴: **C 21 C 1/08**

(21) Anmeldenummer: **81106688.5**

(22) Anmeldetag: **27.08.81**

(54) Verfahren zur Homogenisierung von Gusseisenschmelzen und Presslinge zu seiner Durchführung.

(30) Priorität: **03.09.80 DE 3033194**

(43) Veröffentlichungstag der Anmeldung:
**10.03.82 Patentblatt 82/10**

(45) Bekanntmachung des Hinweises auf die Patenterteilung:
**13.05.87 Patentblatt 87/20**

(84) Benannte Vertragsstaaten:
**AT BE CH DE FR GB IT LI LU NL SE**

(56) Entgegenhaltungen:
**AT - B - 225 217**
**DE - A - 1 583 952**
**DE - B - 1 303 081**
**DE - B - 2 326 174**
**DE - B - 2 329 772**
**DE - B - 2 727 896**
**DE - C - 1 583 262**
**US - A - 2 020 171**
**US - A - 2 478 345**

**Chemische Technologie, Band 5, 4. Auflage, 1981, S. 473-475**

**Die Akte enthält technische Angaben, die nach dem Eingang der Anmeldung eingereicht wurden und die nicht in dieser Patentschrift enthalten sind.**

(73) Patentinhaber: **Werner Kessl Giessereibedarf GmbH, Post Pressath, D-8481 Bärnwinkel (DE)**

(72) Erfinder: **Doliwa, Heinz-Ulrich, Prof. Dr., Ginsterweg 6, D-6360 Friedberg (DE)**

(74) Vertreter: **Patentanwälte TER MEER - MÜLLER - STEINMEISTER et al, Mauerkircherstrasse 45, D-8000 München 80 (DE)**

## Beschreibung

Gegenstand der Erfindung sind kohlenstoffhaltige Presslinge für die Homogenisierung von Gusseisenschmelzen aus heterogener Gattierung im Kupolofen, bestehend aus Siliciumcarbid oder anderen Legierungsträgern und schlackenbildenden Beimengungen aus dem Dreistoffsystem 8 bis 18% CaO – 10 bis 40% SiO$_2$ – 2 bis 16% Al$_2$O$_3$ einschliesslich Zement als Bindemittel sowie gegebenenfalls Graphit und ein Verfahren zur Herstellung homogener Gusseisenschmelzen unter Verwendung dieser Presslinge.

Ein hochwertiges Gusseisen mit vielseitiger Verwendbarkeit muss sich auch bei höherer Festigkeit spanend gut bearbeiten lassen. Dazu ist ein feinkörniges Gefüge, welches sich durch eine hohe Zahl an eutektischen Zellen nachweisen lässt, und eine gleichmässige Verteilung des Graphits vom A-Typ notwendig. Die Schmelze muss deshalb eine geeignete Zusammensetzung vornehmlich an Kohlenstoff und Silicium aufweisen, wobei der Gehalt an Phosphor und Schwefel bei Qualitätsguss möglichst niedrig sein sollte. Die in der Praxis üblicherweise verwendete Kennzeichnung der chemischen Zusammensetzung ist der Sättigungsgrad S$_c$ der gemäss der folgenden Formel (1) berechnet werden kann

$$S_c = \frac{\%C}{4,3 - \frac{1}{3}(Si + P)} \qquad (1)$$

Der Sättigungsgrad steht zu den mechanischen Werkstoffwerten (bezogen auf den Zugversuch am 30 mm -Probestab) in folgender Beziehung:

$$(R_m)_{theor.} = 1000 - 800 \times S_c \; [N/mm^2] \qquad (2)$$

$$RH = \frac{HB\ gemessen}{100 + 4,3\sigma_{zB\ gem.}} \qquad (3)$$

Bei der Herstellung von Gusseisenschmelzen in Kupolöfen geht man nicht nur aus wirtschaftlichen, sondern dominierend auch aus metallurgischen Gründen mehr und mehr dazu über, hohe Stahlschrottanteile (von 50% und mehr) in der Gattierung anzuwenden. Höhere Stahlschrottansätze erfordern aber eine Anreicherung der Gattierung an Kohlenstoff- und Silicium-Trägern, um den benötigten Sättigungsgrad zu erreichen.

Bewährt haben sich für diesen Zweck Form-Presslinge auf Siliciumcarbidbasis, wie sie aus der DE-C-1 583 262 bekannt sind, bei denen zugesetzte Begleitstoffe dafür sorgen, dass die Presslinge ohne wesentlichen Abbrand in die Schmelzzone gelangen, wo die dort sich aus den Begleitstoffen bildende Schlacke reduzierende Verhältnisse schafft. Als Begleitstoffe werden nach der Lehre dieser Druckschrift 15 bis 25% SiO$_2$, 7 bis 30% Al$_2$O$_3$ und 12 bis 15% CaO als an sich bekanntes Bindemittel eingesetzt.

Bei sehr hohen Stahlschrottanteilen von etwa 80 bis 90% in der Gattierung bilden sich je nach Verrostungsgrad des Schrotts FeO-reiche Primärschlacken. Um deren Einfluss zu begrenzen, ist es aus der DE-B-2 727 896 bekannt, SiC-Presslinge mit 3 bis 35% Graphit zu versetzen, wobei das Graphit bevorzugt aus Elektrodenresten stammt, die üblicherweise Pech und Teer als Binder aufweisen.

Für den Konstrukteur ist die Zugfestigkeit ein wichtiger Massstab hinsichtlich der Belastbarkeit eines Gusseisens, während die Härte Auskunft über die Bearbeitbarkeit des Werkstoffes gibt. Die Härte wird bei Gusseisenwerkstoffen wesentlich durch die Art und die Menge des ausgeschiedenen Graphits bestimmt. Für die Graphitausscheidung und -ausbildung ist der Keimzustand der Schmelze massgebend. Viele Keime führen zu zahlreichen Kristallisationszentren und damit zu einem feinkörnigen Gefüge, verbunden mit wenig verzweigtem Graphit etwa vom Typ A$_{3-4}$. Bei der Betrachtung des Graphitisierungsprozesses dürfen die Abkühlungsbedingungen der Schmelze in der Form nicht ausser acht gelassen werden. So geben dünnwandige Gussstücke dem Kohlenstoff nur wenig Zeit, sich aus der Verbindung Fe$_3$C als Graphit auszuscheiden. Zur Beschleunigung der Graphitbildung werden deshalb in der Regel die Schmelzen noch in der Pfanne oder in der Form mit graphitbildenden Stoffen angeimpft. Der Impfmittelbedarf steigt, wenn die aus dem Ofen oder dem Vorherd entnommene Schmelze keimarm ist. Höhere Impfmittelzugaben wirken sich aber erfahrungsgemäss nachteilig aus, da die Lunkerung und die Zahl der Oxideinschlüsse ansteigen. Deshalb ist ein hoher Keimzustand des Basiseisens immer erwünscht. Erhebliche Unterschiede in der Härte von dünneren und dickeren Querschnitten eines Gussstücks sind einem guten Bearbeitungsergebnis abträglich und in vielen Fällen auch wegen des damit verbundenen unterschiedlichen Verschleisses bei abrasiver Beanspruchung unerwünscht.

Eine Verbesserung der Graphitierung und damit eine Verminderung der Härte sowie der Neigung zur Zementitbildung (Weisseinstrahlung) erreicht man durch Aufkohlung. Das Eindringen des Kohlenstoffs in grösseren Mengen bis in die Schmelzzone eines Schachtofens ist aber wegen der üblicherweise vorhandenen oxidierenden Atmosphäre und der FeO-haltigen Primärschlacke schwierig. Als einzig geeigneter Kohlenstoffträger hat sich unter solchen Bedingungen Graphit erwiesen (siehe die DE-B-2 727 896). Deshalb wurde bereits versucht, Kohlenstoffträger, wie Leicht-, Mittel- oder Schweröl, Teer- und andere Destillate in die Schmelzzone des Ofens einzublasen, wobei zur Vermeidung von Düsenverstopfungen durch Verkokungsprodukte Lösungsmittel zugesetzt und/oder besondere Brenner für Natur- oder andere Gase verwendet werden.

So beschreibt die DE-B-2 329 772 ein Verfahren zum Erschmelzen von Gusseisen in vorausberechenbarer Qualität durch Schmelzen von heterogenem Ausgangsmaterial mit korrigierenden Zusätzen in Form von chemischen Verbindungen, die ausserhalb der Chargierung in den Kupolofen eingeführt werden. Dem Kupolofen werden durch Düsen kontinuierlich geringe Mengen an Ozon, sowie Stickstoff und Halogene (Chlor, Fluor) freisetzende Substanzen, teils zusammen mit Lösungsmitteln und aufkohlenden Substanzen zugeführt. Die Zusätze und deren Mengen werden in Abhängigkeit vom Kohlenstoffäquivalent und der Liquidus-Temperatur berechnet. Dieses Verfahren ist in seinem Rechengang kompliziert, erfordert Spezialanbauten am Kupolofen (Düsen oder Brenner) und zur Erfüllung der Emulsionsvorschriften kostenintensive Investitionen.

Es ist weiterhin aus der AT-B-225 217 bekannt, freies Siliciumcarbid ungebunden oder in üblicher brikettierter Form den Kupolofengattierungen zuzusetzen. Dabei können zum Brikettieren die üblichen zementartigen oder teerartigen Binder verwendet oder auch die reine Druckpressung ohne Binder angewandt werden.

Schliesslich beschreibt die US-A-2 020 171 die Herstellung von Gusseisenschmelzen im Kupolofen unter Verwendung von Siliciumcarbid, welches auch in brikettierter Form zugesetzt werden kann. Dabei können die Briketts unter Verwendung von Teer oder Pech als Bindemittel oder auch dadurch verfestigt werden, dass man das geformte Brickett in einen Schlicker aus Portland-Zement oder in eine Natriumsilicatlösung eintaucht. Aufgrund der in dem Kupolofen vorherrschenden hohen Temperaturen gelangt aber lediglilch das nach diesen Literaturstellen eingesetzte Siliciumcarbid bis in die Schlackenzone, nicht aber als Bindemittel verwendete Substanzen, wie Teer oder Pech.

Die Aufgabe der vorliegenden Erfindung besteht nun darin, den Ausgleich einer heterogenen Gattierung durch entsprechende Zusätze zu den kohlenstoffhaltigen Presslingen zu erreichen, die auch im Bereich der Schmelzzone wirksam werden. Dies wird erfindungsgemäss dadurch erreicht, dass beispielsweise den gemäss der DE-C-1 583 262 oder DE-B-2 727 896 hergestellten Presslingen aus Siliciumcarbid und/oder anderen üblichen Legierungsträgern und Gattierungsbestandteilen bestimmte Kohlenwasserstoffverbindungen bzw. Kohlenwasserstoff-Stickstoff-Verbindungen zugesetzt werden.

Gegenstand der Erfindung sind daher kohlenstoffhaltige Presslinge für die Homogenisierung von Gusseisenschmelzen aus heterogener Gattierung im Kupolofen, bestehend aus Siliciumcarbid oder anderen Legierungsträgern und schlackenbildenden Beimengungen aus dem Dreistoffsystem 8 bis 18% CaO – 10 bis 40% $SiO_2$ – 2 bis 16% $Al_2O_3$ einschliesslich Zement als Bindemittel und gegebenenfalls Graphit, welche dadurch gekennzeichnet sind, dass sie als zusätzlichen Bestandteil 0,5 bis 40% Naphthalin, Anthracen, Pyren, Carbazol, Phenylcarbazol und/oder Anthrachinon, bezogen auf das Gewicht des Presslings, enthalten.

Als Legierungsträger enthalten diese Presslinge vorzugsweise Ferrosilicium, Calciumsilicium, Ferrochrom, Ferromangan, Ferrophosphor, Eisen- oder Stahlspähne und können gegebenenfalls übliche Gattierungsbestandteile enthalten. Als übliche Gattierungsbestandteile können Eisen- oder Stahlspähne, Kalk, Sand, Kieselsteine und Zement enthalten sein.

Die erfindungsgemäss eingesetzten Kohlenstoff bzw. Kohlenstoff-Stickstoffverbindungen bewirken in kürzester Zeit eine reduzierende Atmosphäre, eine Begrenzung der oxidulhaltigen Primärschlacken und damit ein praktisch abbrandfreies Eindringen von Kohlenstoff und Silicium aus dem im Pressling enthaltenen Siliciumcarbid und Graphit. Die Aufkohlung, Aufsilicierung und eine wirksame Reduktionsschlacke stellen die Voraussetzungen für die Bildung eines günstigen Keimzustandes und einer homogenen Schmelze her. Dies trifft für untereutektische Gusseisensorten mit Lamellengraphit (GG) ebenso zu wie für eutektische und übereutektische Sorten, und ist auch für die Erzeugung von Basisschmelzen zur Herstellung von Gusseisen mit Kugelgraphit (GGG) von grosser Bedeutung.

Gegenstand der Erfindung ist daher auch ein Verfahren zur Herstellung homogener Gusseisenschmelzen aus heterogener Gattierung mit bis zu sehr hohem Stahlschrottanteil sowie anderen üblichen Gattierungsbestandteilen, wie Gussbruch, Kreislaufmaterial und Ofenzusätzen durch Zugabe der oben beschriebenen erfindungsgemässen kohlenstoffhaltigen Presslinge.

Die Zusatzmengen an den erfindungsgemäss als zusätzlichen Bestandteil verwendeten Verbindungen Naphthalin, Anthracen, Pyren, Carbazol, Phenylcarbazol und/oder Anthrachinon hängen vom Stahlschrottanteil in der Gattierung ab. Mit steigendem Stahlschrottanteil erhöht sich neben dem Bedarf an Kohlenstoff auch der Bedarf an Silicium zur Einstellung des benötigten Sättigungsgrades, so dass es praktikabel ist, die SiC-Presslinge mit einem feststehenden Zusatz an den vorerwähnten homogenisierend wirkenden Substanzen zu versehen. Die Wirksamkeit der Zusätze ist aus den nachfolgend aufgeführten Betriebsergebnissen ersichtlich.

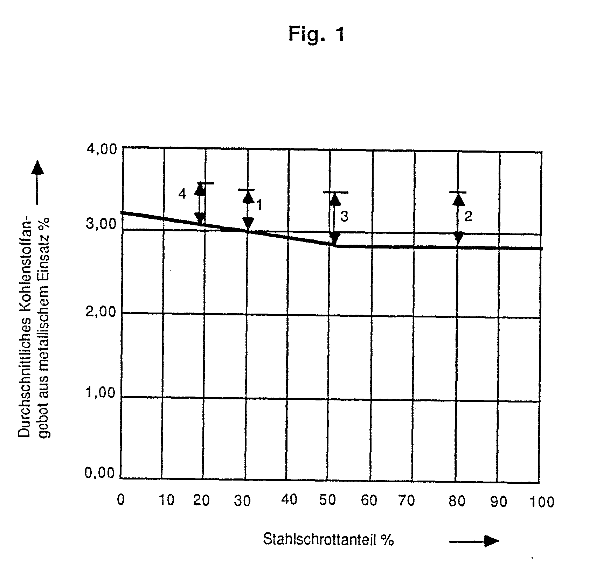

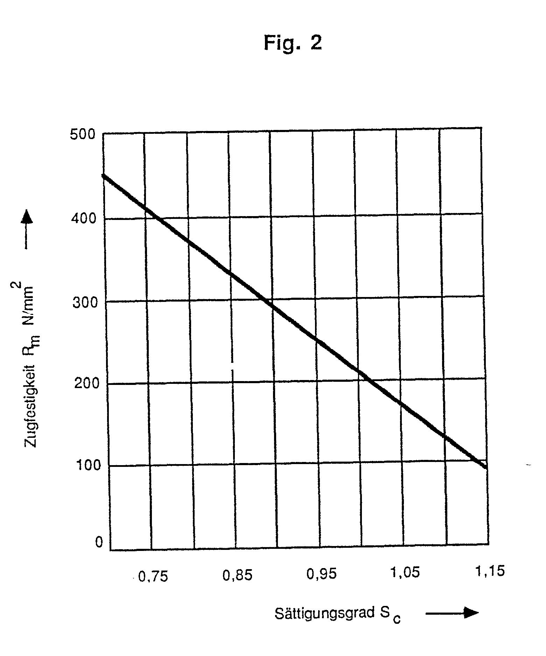

Die Zusatzmenge an kohlenstoffhaltigen Presslingen mit den homogenisierend wirkenden erfindungsgemäss verwendeten Beimischungen wird in Abhängigkeit von dem Stahlschrottanteil in der Gattierung und der gewünschten Zufestigkeit $R_m$ festgelegt und gemäss den Fig. 1 und 2 berechnet. Dabei zeigen

Fig. 1 den Zusammenhang zwischen der Zugfestigkeit $R_m$ und dem Sättigungsgrad $S_c$ gemäss der Beziehung $R_m = 1000-800 \times S_c$ und Fig. 2 die Beziehung zwischen dem Stahlschrottanteil in % und dem durchschnittlichen Kohlenstoffangebot aus dem metallischen Einsatz.

Unter Anwendung dieser Figuren wird zunächst aus der Fig. 1 ausgehend von der angestrebten Festigkeit der Wert des Sättigungsgrades $S_c$ entnommen. In Abhängigkeit von dem gewählten Kohlenstoffgehalt und dem aus der Fig. 2 entnehmbaren durchschnittlichen Kohlenstoffangebot des metallischen Einsatzes, der von dem Stahlschrottanteil abhängt, wird der Kohlenstoffbedarf ermittelt, aus dem die einzusetzende Siliciummenge gemäss der obigen Formel (1) berechnet wird.

Kaltwindofenschmelze mit 30% Stahlschrott in der Gattierung; Satzgewicht 750 kg, Zusatz: 4 Presslinge

| l. fd. Nr. | Chemische Zusammensetzung | | | | | | $R_m$ | HB 2,5/187,5 | Rel. Härt. RH | Reifegr. RG |
| | C (%) | Si (%) | Mn (%) | P (%) | S (%) | $S_c$ (%) | (N/mm²) | | | (%) |
|---|---|---|---|---|---|---|---|---|---|---|
| 1 | 3,39 | 2,38 | 0,54 | 0,301 | 0,081 | 1,00 | 252 | 219/211 | 1,033 | 126 |
| 2 | 3,69 | 2,34 | 0,52 | 0,235 | 0,040 | 1,07 | 181 | 181/184 | 1,04 | 125 |

Aus der gleichen Schmelze wurden an Stufenkeilen folgende Härtewerte ermittelt:

| Stufenhöhe in mm | Probe-Nummer 1 HB | 2 HB |
|---|---|---|
| 4,5 vordere Spitze | 252 | 211 |
| 4,5 Mitte | 254 | 217 |
| 9,0 Mitte | 247 | 212 |
| 13,5 Mitte | 247 | 210 |
| Gesamtstreuung HB | 7 | 7 |

Von einer Schmelze aus dem Heisswindofen mit einem Stahlschrottanteil von 60% werden nach dem Zusatz von 8 bis 12 Presslingen (Zugfestigkeit des Gusseisens $R_m$ = 344 N/mm²) Stufenkeile mit einer Gesamtlänge von 240 mm mit den Stufenabmessungen 60 × 60 mm – 12 × 60 mm – 25 × 60 mm – 50 × 60 mm gegossen. Die Streuungen der Härtewerte vom Rand- zur Mittelzone betrugen in der 50 mm Stufe 4 HB-Einheiten, in der 25 mm Stufe 5 HB-Einheiten, ebenso in der 12 mm Stufe und in der 6 mm Stufe 8 HB-Einheiten.

Die folgenden Beispiele dienen der weiteren Erläuterung der Erfindung.

Beispiel 1

Es wird ein Gusseisen mit einer Festigkeit $R_m$ von 250 N/mm² angestrebt. Aus der Fig. 1 ergibt sich dafür ein Wert des Sättigungsgrades $S_c$ von 0,93. Gewählt wird ein Kohlenstoffgehalt C = 3,4% für die Analyse. Gearbeitet wird mit einer Gattierung mit einem Stahlschrottanteil von 30% und einem Satzgewicht von 500 kg.

Nach Fig. 2 beträgt der Abstand des Kohlenstoffangebots aus der Gattierung zum angestrebten Wert von 3,4% etwa 0,49%, was einem Bedarf von 2,4 kg Kohlenstoff pro Satz entspricht. Das Kohlenstoffangebot eines Presslings liegt bei 700 g. Somit werden 3 Presslinge pro Satz benötigt.

Eine Nachrechnung des Siliciumgehalts ergibt:

70% Gattierungsbestandteile ohne Stahl
(Si = 0 1,75%)     1,225% Si
3 Presslinge mit je 1 kg Si Nutzinhalt   0,600% Si
                   1,825% Si

Demzufolge: $S_c = \dfrac{3,4}{4,3 - \frac{1}{3}(1,8+0,2)} = 0,93$

Beispiel 2

Bei einer angestrebten Festigkeit $R_m$ von 300 N/mm² ergibt sich aus der Fig. 1 ein Sättigungsgrad $S_c$ von 0,88. Gewählt wird ein Kohlenstoffgehalt C von 3,4% und gearbeitet wird mit einem Stahlschrottanteil von 80% und einem Satzgewicht von 650 kg. Entsprechend der Fig. 2 beträgt die Kohlenstoffdifferenz 0,72% oder 4,68 kg pro Satz. Dies ergibt einen Presslingsbedarf von 7 Stück pro Satz.

An Silicium liefern:
20% stahlfreie Gattierung mit 1,5% Si = 0,3% Si
7 Presslinge mit je 1 kg Si Nutzinhalt = 1,1% Si
                   1,4% Si

Demzufolge: $S_c = \dfrac{3,4}{4,3 - \frac{1}{3}(1,4+0,1)} = 0,89$

Beispiel 3

Für dünnwandigen Guss wird eine Schmelze mit einem Sättigungsgrad $S_c$ = 1,00 bei einem Kohlenstoffgehalt C = 3,4% hergestellt. Bei einem Satzgewicht von 600 kg und einem Stahlschrottanteil von 50% beträgt der Kohlenstoffbedarf nach Fig. 1 etwa 0,78% oder 4,7 kg pro Satz. Damit errechnet sich ein Presslingsbedarf von 7 Stück pro Satz.

50% stahlfreie Gattierungsbest. mit 2,4% Si liefern       1,2 % Si
7 Presslinge mit je 1 kg Si Nutzinhalt ergeben       1,17% Si
                   2,37% Si

Demzufolge: $S_c = \dfrac{3,4}{4,3 - \frac{1}{3}(2,37+0,2)} = 0,99$

Beispiel 4

Es soll eine Schmelze mit einem Sättigungsgrad $S_c$ von 1,1 bei einem Kohlenstoffgehalt C = 3,6% hergestellt werden. Bei einem Satzgewicht von 500 kg und einem Stahlschrottanteil von 20% beträgt der Kohlenstoffbedarf gemäss Fig. 2 etwa 0,6% oder 3,5 kg pro Satz. Damit werden 4 Presslinge pro Satz benötigt.

80% stahlfreie Gattierungsbest. mit 2,4% Si =       1,92% Si
4 Presslinge mit je 1 kg Si Nutzinhalt =       0,80% Si
                   2,72% Si

Demzufolge: $S_c = \dfrac{3,4}{4,3 - \frac{1}{3}(2,7+0,1)} = 1,11$

## Patentansprüche

1. Kohlenstoffhaltige Presslinge für die Homogenisierung von Gusseisenschmelzen aus heterogener Gattierung im Kupolofen, bestehend aus Siliciumcarbid oder anderen Legierungsträgern und schlackenbildenden Beimengungen aus dem Dreistoffsystem 8 bis 18% CaO – 10 bis 40% $SiO_2$ – 2 bis 16% $Al_2O_3$ einschliesslich Zement als Bindemittel und gegebenenfalls Graphit, dadurch gekennzeichnet, dass sie als zusätzlichen Bestandteil 0,5 bis 40% Naphthalin, Anthracen, Pyren, Carbazol, Phenylcarbazol und/oder Anthrachinon, bezogen auf das Gewicht des Presslings enthalten.

2. Presslinge nach Anspruch 1, dadurch gekennzeichnet, dass sie als Legierungsträger Ferrosilicium, Calciumsilicium, Ferrochrom, Ferromangan, Ferrophosphor, Eisen- oder Stahlspäne und gegebenenfalls übliche Gattierungsbestandteile enthalten.

3. Verfahren zur Herstellung homogener Gusseisenschmelzen aus heterogener Gattierung mit bis zu sehr hohem Stahlschrottanteil sowie anderen üblichen Gattierungsbestandteilen, wie Gussbruch, Kreislaufmaterial und Ofenzusätzen durch Zugabe von kohlenstoffhaltigen Presslingen, bestehend aus Siliciumcarbid oder anderen Legierungsträgern und schlackenbildenden Beimengungen aus dem Dreistoffsystem 8 bis 18% CaO – 10 bis 40% $SiO_2$ – 2 bis 16% $Al_2O_3$ einschliesslich Zement als Bindemittel und gegebenenfalls Graphit, dadurch gekennzeichnet, dass Presslinge zugesetzt werden, die als zusätzlichen Bestandteil 0,5 bis 40% Naphthalin, Anthracen, Pyren, Carbazol, Phenylcarbazol und/oder Anthrachinon, bezogen auf das Gewicht des Presslings, enthalten.

## Claims

1. A carbon containing compact for homogenizing cast-iron melts from a heterogeneous charge in the cupola furnace consisting of silicon carbide or other alloying substances and slag-forming admixtures from the ternary system 8 to 18% CaO – 10 to 40% $SiO_2$ – 2 to 16% $Al_2O_3$ including cement as a binder and optionally graphite characterized by containing as an additional component 0,5 to 40% naphthalene, anthracene, pyrene, carbazol, phenylcarbazol and/or anthraquinone, based on the weight of the compact.

2. The compact according to claim 1, characterized by containing as alloying substances ferrosilicon, calcium silicon, ferrochromium, ferromanganese, ferrophosphorous, iron or steel chips and optionally ordinary charge components.

3. A method of producing homogeneous cast-iron melts from a heterogeneous charge containing a proportion of steel scrap of up to very high amount as well as other ordinary charge components, such as broken castings, recycle material and furnace additives by adding carbon containing compacts consisting of silicon carbide or other alloying substances and slag-forming admixtures from the ternary system 8 to 18% CaO – 10 to 40% $SiO_2$ – 2 to 16% $Al_2O_3$ including cement as a binder and optionally graphite characterized by adding compacts containing as an additional component 0,5 to 40% naphthalene, anthracene, pyrene, carbazol, phenylcarbazol and/or anthraquinone, based on the weight of the compact.

## Revendications

1. Pièces pressées à base de carbone pour homogénéiser des coulées de fonte de composition hétérogène dans le cubilot, constituées de carbure de silicium ou d'autres éléments d'alliage et de constituants formant des scories du système ternaire contenant 8 à 18% de CaO, 10 à 40% $SiO_2$, 2 à 16% $Al_2O_3$ ainsi que du ciment comme liant et le cas échéant du graphite, caractérisées en ce qu'elles contiennent comme constituants supplémentaires de 0,5 à 40% de naphtaline, d'anthracène, de pyrène, de carbazole, de phénylcarbazole et/ou d'anthraquinone, par rapport au poids de la pièce pressée.

2. Pièces pressées selon la revendication 1, caractérisées en ce qu'elles contiennent comme éléments d'alliage du ferro-silicium, du calciumsilicium, du ferro-chrome, du ferro-manganèse, du ferro-phosphore, des copeaux de fer ou d'acier et le cas échéant des constituants usuels du lit de fusion.

3. Procédé de réalisation de coulées de fonte homogènes de composition hétérogène contenant une proportion de mitraille d'acier pouvant être très élevée ainsi que d'autres constituants usuels du lit de fusion tels que de la mitraille de fonte, des matériaux de récupération et des produits d'addition de four, par addition de pièces pressées à base de carbone constituées de carbure de silicium ou d'autres éléments d'alliage et de constituants formant des scories du système ternaire contenant 8 à 18% de CaO, 10 à 40% $SiO_2$, 2 à 16% $Al_2O_3$ ainsi que du ciment comme liant et le cas échéant du graphite, caractérisé en ce que l'on ajoute des pièces pressées qui contiennent comme constituants supplémentaires de 0,5 à 40% de naphtaline, d'anthracène, de pyrène, de carbazole, de phénylcarbazole et/ou d'anthraquinone, par rapport au poids de la pièce pressée.

Fig. 1

## Fig. 2